# EUROPEAN PATENT SPECIFICATION

(11) **EP 3 908 436 B1**
(45) Date of publication and mention of the grant of the patent: **10.04.2024**
(21) Application number: 19839673.1
(22) Date of filing: 19.12.2019
(51) Int. Cl.: B27M 3/04, E04F 15/02, F16B 5/00, E04F 13/10, B27G 13/14

(54) **METHOD, APPARATUS, USE AND ROTATING CUTTING TOOLS FOR PROFILING EDGES OF A PANEL**
VERFAHREN, VORRICHTUNG, NUTZUNG UND ROTIERENDES WERKZEUG FÜR KANTENPROFIELIERUNG VON PANELEN
METHODE, APPAREIL, UTILISATION ET OUTILS DE COUPE ROTATIFS POUR USINAGE DE PROFILS DE PANEAUX

(30) Priority: 08.01.2019 US 201962789781 P
(43) Date of publication of application: 17.11.2021
(73) Proprietor: Unilin, BV, 8710 Wielsbeke (BE)
(72) Inventor: DE RICK, Jan, 9500 Geraardsbergen (BE)
(74) Representative: Unilin Technologies
(86) International application number: PCT/IB2019/061121
(87) International publication number: WO 2020/144520

(56) References cited:
- WO-A1-2008/010060
- WO-A1-2017/046693
- DE-A1- 3 214 207
- US-A1- 2019 262 915
- US-A9- 2015 343 577

## Description

The present invention relates to a method for profiling edges of a panel according to the preamble of claim 1. Such a method is known from the cited document WO 2008/010060 A1.

More specifically, the invention relates to a method of the type wherein the panel comprises a first interlocking profile on a first edge and comprises a second interlocking profile on a second, opposite edge, which first and second interlocking profile are configured to cooperate and thus to realize mechanical interlocking between two such panels; wherein the first interlocking profile is configured in the form of a tongue; wherein the tongue comprises, on the upper side thereof, a vertically active interlocking surface and, on the underside thereof, an interlocking groove with a horizontally active interlocking surface; wherein the second interlocking profile is configured in the form of a groove; wherein the groove is bounded by an upper and lower lip; wherein the upper lip comprises, on the underside thereof, a vertically active interlocking surface that is configured to cooperate with the vertically active interlocking surface on the upper side of the tongue and thus to realize a vertical interlocking between two such panels; wherein the lower lip comprises, on the upper side thereof, an interlocking element with a horizontally active interlocking surface that is configured to cooperate with the horizontally active interlocking surface in the interlocking groove and thus to realize a horizontal interlocking; and wherein the method comprises at least the following steps:
- moving the panel into a feeding device (FD) with the first edge relative to a first tool device comprising a first and second rotating cutting tool and with the second edge relative to a second tool device comprising a third and fourth rotating cutting tool;
- forming a first and second, different subcontour of the tongue by means of the first and second rotating cutting tool, respectively, wherein the first subcontour comprises the horizontally active interlocking surface of the tongue and the second subcontour comprises the vertically active interlocking surface of the tongue; and
- forming a third and fourth, different subcontour of the groove by means of the third and fourth rotating cutting tool, respectively, wherein the third subcontour comprises the horizontally active interlocking surface of the groove and the fourth subcontour comprises the vertically active interlocking surface of the groove.

A method of this type is known and is for example described in the document WO 97/47834 for floor panels of the laminate type to be installed in a floating manner.

A general problem with this known method, primarily in cases where it is used in a panel that comprises a core or core layer out of hard and/or brittle materials, such as highly-filled and/or rigid plastic materials, is that the rotating cutting tools act on the edges of the panel with a significant impact or friction, possibly resulting in all kinds of detrimental effects, such as a fairly high energy consumption by the rotating cutting tools, which means for example that the capacity of the line cannot always be utilized in an optimal manner.

A known solution is to increase the number of rotating cutting tools that are used to form the interlocking profiles. In fact, this makes it possible to insure that per cutting tool, less material has to be removed, less impact/friction will be generated, and the energy consumption per cutting tool can therefore be reduced. However, more cutting tools means that more room is required in order to provide space for all these tools, which is not always possible, and all this does not necessarily result in reduced total energy consumption, but sometimes even the contrary.

The aim of the present invention is to overcome the abovementioned and other drawbacks, and its particular object is to reduce the impact with which the rotating cutting tools act on the edges of the panel, so that, more specifically, reduced or more balanced energy consumption by the rotating cutting tools can be achieved.

To this end, the invention relates to a method as defined in claim 1. It is clear that the "respective interlocking profile" refers to the interlocking profile that is partly formed by the at least one rotating cutting tool. As the at least one rotating cutting tool, i.e. the rotating cutting tool comprising the first and second group of teeth, comprises teeth with a different form, this gives rise to new possibilities of reducing the impact/friction of this rotating cutting tool on the respective edge. In the rotating cutting tools of the prior art, each tooth has the same form, so that each tooth causes an equal impact on the edge of the panel. In accordance with the invention, because not every tooth has the same form, one can make the choice of having some teeth form not the entire respective subcontour, but only a limited part or piece thereof, thus causing less impact/friction. The at least one rotating cutting tool thus need not consume as much energy, making it possible for example to optimally utilize the line capacity.

It is noted that a "subcontour" is understood to be a part or piece of the final contour of the respective interlocking profile.

The first and second subcontour, or the third and fourth subcontour, together do not necessarily have to form the entire final contour of the first or second interlocking profile respectively. It is thus possible for the final contour of the first or second interlocking profile to also comprise other pieces or parts in addition to the abovementioned subcontours, which for example are formed with other tools.

"Different parts" or "different pieces" of a contour or subcontour are understood to be parts or pieces that, while not identical, can be overlapping. Therefore, the different parts or pieces of the contour or subcontour need not necessarily be separate, and thus non-overlapping, parts or pieces.

It is not excluded for a "group of teeth" to consist of only one tooth. Preferably, however, a group comprises several teeth. The several teeth of one and the same group are preferably identical in form.

Preferably, only a limited part of the respective subcontour is formed with the teeth of the second group. In other words, the entire respective subcontour is not formed with the teeth of the second group. It is clear that the "respective subcontour" refers to the subcontour that is formed with the at least one rotating cutting tool. As the teeth of the second group form only a limited part of the respective subcontour, this provides the advantage that the impact with which the at least one rotating cutting tool acts on the respective edge can be reduced, and the energy composition of this tool can therefore be reduced. However, this also means that another part of the respective subcontour is not treated by the teeth of the second group. Although this can be detrimental to the precision with which this other part is formed, a possible adverse effect can be limited for example in that the untreated part of the respective subcontour is intended to be used in order to enclose a space or an air space in the interlocked state of the panels. With such zones of the contours of the interlocking profiles, extremely high precision is of less importance.

Only a limited part of the respective subcontour can be formed with the teeth of the first group as well. Preferably, however, the entire respective subcontour is formed with the teeth of the first group. This provides the practical advantage that the number of groups of teeth with a different form can be kept limited. The respective subcontour is already completely formed by the teeth of the first group. This makes it possible to limit the total number of groups of teeth with a different form to two or three, although the use of more than three groups of teeth with a different form is not excluded.

Preferably, the respective interlocking surface is formed with the teeth of both the first and the second groups. It is clear that the "respective interlocking surface" refers to the interlocking surface that is formed by the at least one rotating cutting tool, comprising the first and second group of teeth. As the respective interlocking surface is treated or formed by the teeth of both the first and the second group, this interlocking surface can be produced with high precision. Indeed, the greater the number of teeth that treat or form a certain surface, the more precisely this surface is formed and the lower the production tolerances are. This is of particular importance in the case of an interlocking surface because in this way, one can minimize the risk of occurrence of cracks or the occurrence of height differences between the interlocked panels.

It is possible for different and non-overlapping parts of the respective subcontour to be formed with the teeth of the first and second group. In other words, the part of the respective subcontour that is formed with the teeth of the first group is different from and does not overlap with the part of the respective subcontour that is formed with the teeth of the second group. This is advantageous in that a balanced distribution of the amount of material to be removed can be achieved, which allows the impact created by the at least one rotating cutting tool to be reduced and for example allows the line capacity to be optimally utilized. This measure can have a detrimental effect on the precision with which the respective parts of the subcontour are formed, as only one of the first and second group of teeth treats the respective parts, but it can nevertheless be useful in applications in which a high line speed is important.

The at least one rotating cutting tool comprises a tooth sequence that repeats along at least a part of the circumference of the at least one rotating cutting tool, which tooth sequence comprises a tooth from both the first and the second group. This is an efficient and practical way of configuring the at least one rotating cutting tool.

The at least one rotating cutting tool can be the first or second rotating cutting tool, and can thus be used to form the first or second subcontour, respectively, of the first interlocking profile of the tongue. It is also possible for both the first and the second rotating cutting tool to be configured in the same way as the at least one rotating cutting tool and therefore to comprise several groups of teeth with a different form. However, the first and/or second rotating cutting tools can also be "classical" rotating cutting tools, i.e. rotating cutting tools whose teeth have an identical form. For forming the tongue, typically less material has to be cut away than for forming the groove. The rotating cutting tools that are used for forming the tongue consequently have less of an impact on the respective edge of the panel. For this reason, it may be sufficient to use classical rotating cutting tools with a view to the energy consumption and/or the optimal utilization of the line speed or line capacity.

The at least one rotating cutting tool can be the third or fourth rotating cutting tool, and can thus be used to form the third or fourth subcontour, respectively, of the second interlocking profile of the groove. It is also possible for both the third and fourth rotating cutting tool to be configured in the same way as the at least one rotating cutting tool. The use of the at least one rotating cutting tool for forming the groove is particularly useful because, as mentioned above, large amounts of material typically have to be cut away in this case, resulting in a serious impact on the edge. The measures of the invention allow this impact/friction to be reduced, for example with positive effects on the energy consumption of the tool used and on the line speed that can be realized. However, the use of classical rotating cutting tools for the third and/or fourth rotating cutting is not excluded.

It is also noted that several of the rotating cutting tools can be configured as described in connection with the at least one rotating cutting tool, and several of the rotating cutting tools can therefore comprise at least two groups of teeth with a different form.

In a specific embodiment, the invention relates to a method of the abovementioned type, characterized in that, in the first interlocking profile, first the first and then the second subcontour are formed, and/or in the second interlocking profile, first the third and then the fourth subcontour are formed. By applying this specific order, it is found that a more balanced material removal and/or energy consumption by the rotating cutting tools can be obtained.

The first rotating cutting tool preferably forms the final contour of a first part of the underside of the tongue and the second rotating cutting tool preferably forms the final contour of a second part of the underside of the tongue and the final contour of the upper side of the tongue.

The third rotating cutting tool preferably forms the final contour of a first part of the upper side of the lower lip and the fourth rotating cutting tool preferably forms the final contour of a second part of the upper side of the lower lip and the final contour of the underside of the upper lip.

The final contour of the first interlocking profile of the tongue is preferably mainly formed by the first and second rotating cutting tool. This allows the number of tools used to be limited.

The final contour of the second interlocking profile of the groove is preferably mainly formed by the third and fourth rotating cutting tool. This allows the number of tools used to be limited.

The first and second rotating cutting tool are preferably arranged at different angles. In this connection, "angle" refers to the angle between the plane of the panel and the plane in which the cutting tool rotates.

The third and fourth rotating cutting tool are preferably arranged at different angles.

The first, second, third and/or fourth rotating cutting tool is preferably a rotating milling tool.

The first and/or second tool device preferably comprises a pre-treatment tool. The pre-treatment tool can be used for the correct positioning of the panel. The pre-treatment tool can be used in order to form at least a part of the abutment surface of the respective interlocking profile. An "abutment surface" is understood to refer to a surface of the interlocking profile that is configured to abut against a corresponding abutment surface of the interlocking profile cooperating therewith, so that a continuous surface is formed by the interlocked panels. The abutment surface is typically situated on the upper side of the panel, optionally under a chamfer or bevel that is arranged on the upper side of the panel. By using a pre-treatment tool, the workload of the rotating cutting tools can be reduced. Indeed, this pre-treatment tool can already remove a part of the material to be removed, which results in a more balanced distribution and can reduce the energy consumption of the other tools. The pre-treatment tool can be what is referred to in technical terms as a "post-milling cutter."

The pre-treatment tool is preferably a rotating cutting or milling tool.

The first and/or second tool device preferably comprises a finishing tool. The finishing tool can be used to provide the respective edge of the panel on the upper side thereof with a bevel or chamfer. The finishing tool can be a cutting tool, such as a knife. It is preferably not a rotating cutting tool. The reason for this is that, in this application, a rotating cutting tool can produce a shiny bevel or chamfer, which is not desired.

The finishing tool can be used in order to remove an amount of material in addition to the possible forming of the bevel or chamfer, in such a way that a more balanced energy consumption over the different tools used can be obtained.

The disclosure also relates to an apparatus for profiling edges of a panel, wherein the panel, after this profiling, comprises a first interlocking profile on a first edge and a second interlocking profile on a second, opposite edge, which first and second interlocking profile are configured to cooperate and thus to realize mechanical interlocking between two such panels; wherein the first interlocking profile is configured in the form of a tongue; wherein the tongue comprises, on the upper side thereof, a vertically active interlocking surface and on the underside thereof an interlocking groove with a horizontally active interlocking surface; wherein the second interlocking profile is configured in the form of a groove; wherein the groove is bounded by an upper and lower lip; wherein the upper lip comprises, on the underside thereof, a vertically active interlocking surface that is configured to cooperate with the vertically active interlocking surface on the upper side of the tongue and thus to realize a vertical interlocking between two such panels; wherein the lower lip comprises, on the upper side thereof, an interlocking element with a horizontally active interlocking surface that is configured to cooperate with the horizontally active interlocking surface in the interlocking groove and thus to realize a horizontal interlocking. The apparatus comprises at least:
- a first tool device comprising a first and a second rotating cutting tool;
- a second tool device comprising a third and a fourth rotating cutting tool; and
- means for moving the panel into a feeding device with the first edge relative to the first tool device and with the second edge relative to the second tool device.

The first rotating cutting tool and the second rotating cutting tool are provided for forming a first and second, different subcontour of the tongue by means of the first and second rotating cutting tool, respectively, wherein the first subcontour comprises the horizontally active interlocking surface of the tongue and the second subcontour comprises the vertically active interlocking surface of the tongue. The third rotating cutting tool and the fourth rotating cutting tool are provided for forming a third and fourth, different subcontour of the groove respectively by means of the third and fourth rotating cutting tool. The third subcontour comprises the horizontally active interlocking surface of the groove. The fourth subcontour comprises the vertically active interlocking surface of the groove. The apparatus is characterized in that at least one of the abovementioned rotating cutting tools comprises a first group of teeth with a first form and a second group of teeth with a second, different form, so that different parts of the contour of the respective interlocking profile are formed with the teeth of the first and second group.

It is not excluded for a "group of teeth" to consist only of one tooth. Preferably, however, a group comprises several teeth. The several teeth of one and the same group are preferably identical in form.

The teeth of the second group are preferably provided in order to form only a limited part of the respective subcontour.

The teeth of the first group are preferably provided for forming the entire respective subcontour.

The teeth of the first and of the second group are preferably provided in order to form the respective interlocking surface together.

Preferably, this at least one rotating cutting tool comprises at least three groups of teeth, each having at least two teeth, and preferably each having four teeth.

Preferably, the at least one rotating cutting tool comprises a tooth sequence that repeats along at least a part of the circumference of the at least one rotating cutting tool, which tooth sequence comprises a tooth from both the first and the second group.

Preferably, the at least one rotating cutting tool is the first and/or the second rotating cutting tool.

Preferably, the at least one rotating cutting tool is the third and/or the fourth rotating cutting tool.

Preferably, the first rotating cutting tool is provided for forming the final contour of a first part of the underside of the tongue. Wherein the second rotating cutting tool is provided for forming the final contour of the upper side of the tongue and the final contour of a second part of the underside of the tongue.

Preferably, the third rotating cutting tool is provided for forming the final contour of a first part of the upper side of the lower lip. The fourth rotating cutting tool is provided for forming the final contour of the underside of the upper lip and the final contour of a second part of the upper side of the lower lip.

Preferably, the first and second rotating cutting tool are provided for mainly forming the final contour of the first interlocking profile.

Preferably, the third and fourth rotating cutting tool are provided for mainly forming the final contour of the second interlocking profile.

Preferably, the first and second rotating cutting tool are arranged at different angles.

Preferably, the third and fourth rotating cutting tool are arranged at different angles.

Preferably, the first, second, third and/or fourth rotating cutting tool is a rotating.

Preferably, the first and/or second tool device comprises a pre-treatment tool, by means of which preferably at least a part of an abutment surface of the respective interlocking profile is formed. More preferably, the pre-treatment tool is a rotating cutting or milling tool.

Preferably, the first and/or second tool device comprises a finishing tool, preferably for the forming on the respective edge of a bevel or chamfer adjacent to the upper side of the panel. More preferably, the finishing tool is provided for the removal of an amount of material, in addition to the possible forming of the bevel or chamfer.

The disclosure also relates to a rotating cutting tool suitable for use as a first, second, third or fourth rotating cutting tool in an apparatus such as described above or in a method according to the invention. The rotating cutting tool comprises a first group of teeth with a first form and a second group of teeth with a second, different form, so that different parts of the contour of an interlocking profile can be formed with the teeth of the first and second group.

It is not excluded for a "group of teeth" to consist of only one tooth. Preferably, however, a group comprises several teeth. The several teeth of one and the same group are preferably identical in form.

The disclosure also relates to a rotating cutting tool for forming a profile on an edge of a panel. The rotating cutting tool comprises a first group of teeth with a first form and a second group of teeth with a second, different form.

Preferably, this rotating cutting tool is a rotating milling tool.

It is not excluded for a "group of teeth" to consist of only one tooth. Preferably, however, a group comprises several teeth. The several teeth of one and the same group are preferably identical in form.

The teeth of the first group of teeth and the teeth of the second group of teeth are provided in order to form the profile together.

The first group of teeth and the second group of teeth are each preferably provided for forming a part of the contour of the profile.

Preferably, the first group of teeth and the second group of teeth are provided for forming different parts of the contour of the profile.

Preferably, the rotating cutting tool comprises a tooth sequence that repeats along at least a part of its circumference. This tooth sequence comprises a tooth from both the first and the second group.

Preferably, the rotating cutting tool comprises at least three groups of teeth, each having at least two teeth, and preferably each having four teeth.

The invention can be applied in panels that comprise a core or core layer made of any desired materials, such as wood materials, wood-based materials, for example wood fiberboard, in particular LDF (low density fiberboard), MDF (medium density fiberboard) or HDF (high density fiberboard), or wood particle board, bamboo materials, plastic materials, thermoplastic materials, for example polyvinyl chloride (PVC), in particular flexible, semi-rigid or rigid PVC, polyethylene (PE), polypropylene (PP), thermoplastic polyurethane (PU) or polyethylene terephthalate (PET), thermosetting materials, such as thermosetting polyurethane (PU), ceramic materials, mineral materials, stone or stone-like materials, fiber cement plate or magnesium oxide (MgO) plate.

In the context of this invention, "rigid PVC" is understood to be PVC without a plasticizer or with an amount of plasticizer of less than 5 phr, "semi-rigid PVC" is understood to be PVC with an amount of plasticizer of between 5 and 15 phr, and "flexible PVC" is understood to be PVC with an amount of plasticizer of more than 15 phr. "Phr" is the abbreviation for the English "parts per hundred resin." An amount of plasticizer of less than 5 phr indicates for example that fewer than 5 parts of plasticizer are present per 100 parts of PVC.

The invention is used particularly advantageously in panels that comprise a core or core layer out of fairly hard and/or brittle materials. Examples of such materials are highly-filled plastic materials, rigid or semi-rigid plastic materials, such as rigid or semi-rigid PVC, high-density materials, such as materials with an average density of at least 1000, at least 1500 or at least 1750 kilograms per cubic meter, ceramic materials, mineral materials, stone or stone-like materials, fiber cement plate, magnesium oxide plate and the like. In the case of these materials in particular, the pressures exerted by the cutting tools can be quite high. For this reason, the measures in accordance with the invention are extremely useful in this case.

"Highly-filled plastic material" is understood to be plastic material that comprises a portion of filler of at least 40 percent by weight based on the total weight of the plastic material. Preferably, the plastic material comprises an amount of filler of at least 50 percent by weight, at least 60 percent by weight or at least 70 percent by weight based on the total weight of plastic material.

Examples of fillers that can be used in plastic materials are: mineral fillers, stone or stone-like fillers, calcium carbonate, chalk, lime or limestone, talc, magnesium, magnesium oxide, etc.

The panel is preferably a decorative panel. A "decorative panel" is understood to be a panel that shows, on the upper side thereof, a decor, such as a wood, stone, or imaginative decor. The decor can be formed by natural materials, such as wood or wood veneer. However, the decor can also be a printed decor that for example simulates a natural decor, such as a wood or stone decor. In this case, the decor can be printed on a substrate that is bonded to a core of the panel or can be directly printed on a core of the panel. In the latter case, one speaks of a "direct print," wherein it is not excluded for the print to be applied to a base layer or primer present on the core. Some examples of the abovementioned decor substrates are: paper layers, whether or not impregnated with resin, and plastic films, for example PVC films. Above the decor, a transparent wear layer may be provided, with the intended function of protecting the decor against wear. Examples of wear layers are: lacquer layers, paper layers, whether or not impregnated with resin, and plastic films, such as PVC films.

The invention can be applied in any panels, such as floor, wall or door panels, but it is exceptionally suitable for floor applications.

The first and/or second interlocking profile is preferably configured to consist mainly of the material of the panel and to form an integral piece therewith, more specifically to consist mainly of the material of a core or core layer of the panel and to form an integral piece therewith.

The interlocking profiles can be of the turning type. Interlocking profiles of the "turning type" are interlocking profiles that allow the panels to be interlocked with one another at the respective edges by means of a turning or rotating motion of one panel with respect to the other panel, with or without the occurrence of a click-fit or snap-fit effect.

The interlocking profiles can be of the sliding type. Interlocking profiles of the "sliding type" are interlocking profiles that allow the panels to be interlocked with one another at the respective edges by means of a sliding motion of one panel with respect to the other, more specifically a translational movement in the horizontal direction, typically with the occurrence of a click-fit or snap-fit effect.

The interlocking profiles can be configured to fit into one another with tolerance or to fit precisely. However, the interlocking profiles can also fit into one another with pretensioning. That the interlocking profiles fit into one another "with pretensioning" means that one profile does not fit exactly into the other, so that the profiles fit into one another clampingly. In an interlocking tongue-and-groove connection, such pretensioning can be realized for example by the fact that the lower lip is bent in an interlocked state, so that this lip generates a retroactive or rebound force that presses the interlocked panels against one another. The use of pretensioning is particularly advantageous in this invention because it helps to absorb tolerances, which can be somewhat greater in the invention, for example because not each tooth of the cutting tool described herein forms the entire subcontour. The technology of pretensioning can help to absorb these tolerances, so that panels are obtained wherein the risk of gaps occurring between the interlocked panels is minimized.

It is furthermore noted that a "vertical interlocking" is understood to be a mechanical interlocking that is active in the vertical direction or in the direction perpendicular to the plane of the interlocked panels. A "horizontal interlocking" is understood to be a mechanical interlocking that is active in the horizontal direction or in the direction in the plane of the interlocked panels and perpendicular to the respective edges.

It is also noted that each of the interlocking surfaces introduced in this text may be flat or curved.

In order to better illustrate the characteristics of the invention, several preferred embodiments are described below as examples that are by no means limitative, with reference to the attached drawings, in which:

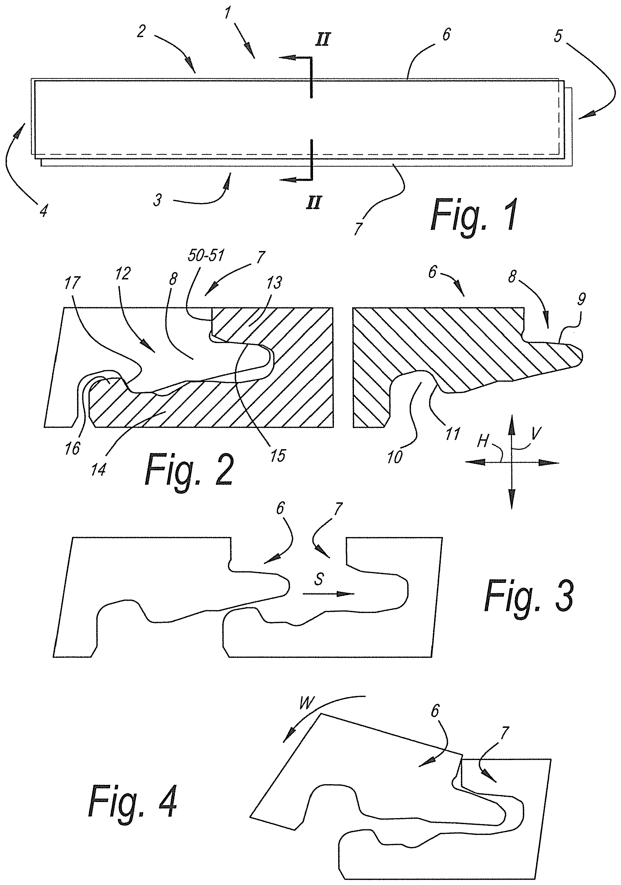

- Fig. 1 shows a top view of a panel, more specifically a floor panel, wherein the edges of this panel are profiled by methods in accordance with the invention;
- Fig. 2 shows an expanded cross-sectional view along line II-II in Fig. 1;
- Figs. 3 and 4 show how such panels can be coupled;

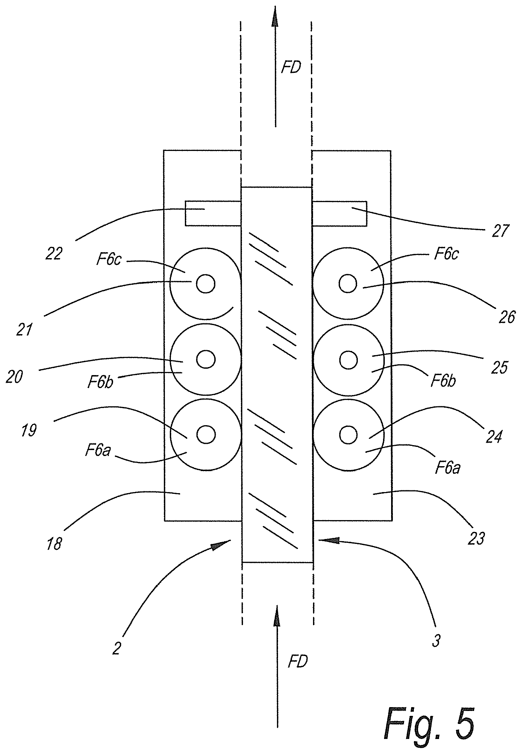

- Fig. 5 shows a method according to the invention and an apparatus according to the disclosure, wherein this method and this apparatus are used for profiling the edges of the panel of Fig. 1;

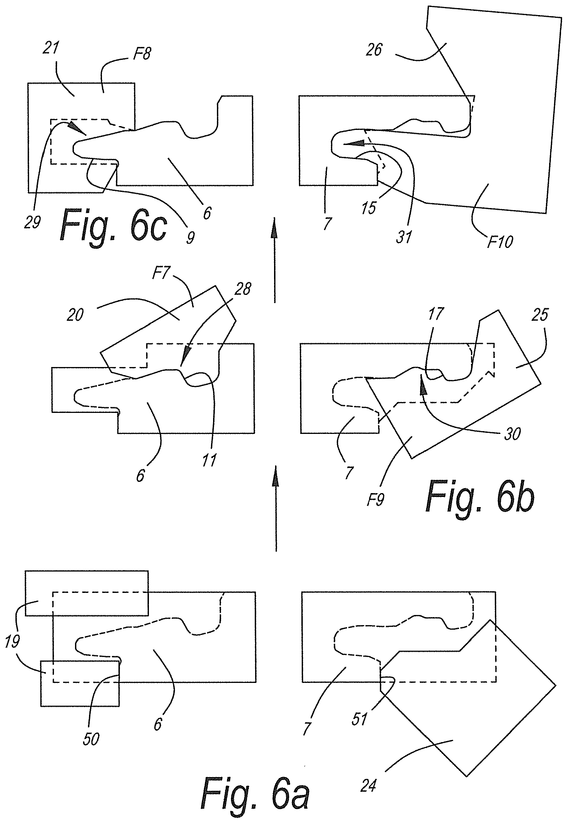

- Figs. 6a, 6b and 6c show cross-sectional views on a larger scale of the way in which the cutting tools denoted by the reference symbols F6a, F6b and F6c act on the edges of the panel; and

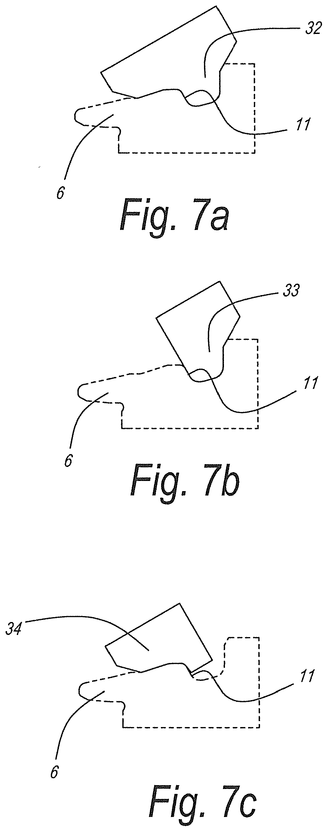

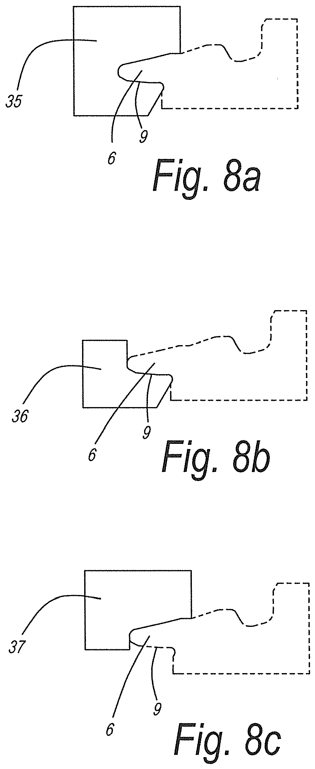

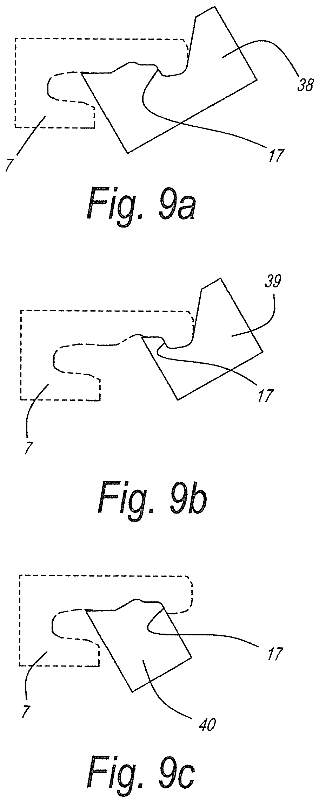

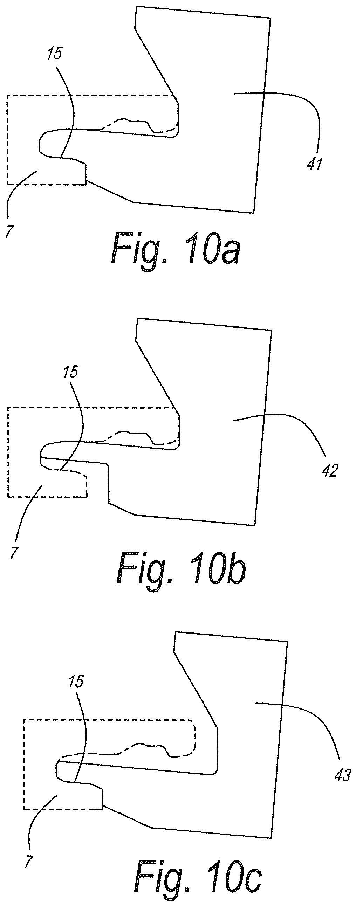

- Figs. 7 to 10 each show one tooth of the three groups of teeth from which the rotating cutting tools denoted by the reference symbols F7 to F10 are constructed, wherein the teeth 32-34, the teeth 35-37, the teeth 38-40 and the teeth 41-43 each form a tooth sequence that repeats along the circumference of the respective rotating cutting tool, in particular four times, so that each of the respective rotating cutting tools comprises twelve teeth.

The figures illustrate a method according to the invention and an apparatus for profiling edges of a panel. The panel (1) comprises a first interlocking profile (6) on a first edge (2) and a second interlocking profile (7) on a second, opposite edge (3). The first and second interlocking profile (6-7) are configured to cooperate and thus to realize mechanical interlocking between two such panels (1). The first interlocking profile (6) is configured in the form of a tongue (8). The tongue (8) comprises, on the upper side thereof, a vertically active interlocking surface (9) and, on the underside thereof, an interlocking groove (10) with a horizontally active interlocking surface (11). The second interlocking profile (7) is configured in the form of a groove (12). The groove (12) is bounded by an upper and lower lip (13-14). The upper lip (13) comprises, on the underside thereof, a vertically active interlocking surface (15) that is configured to cooperate with the vertically active interlocking surface (9) on the upper side of the tongue (8) and thus to realize a vertical interlocking between two such panels. The lower lip (14) comprises, on the upper side thereof, an interlocking element (16) with a horizontally active interlocking surface (17) that is configured to cooperate with the horizontally active interlocking surface (11) in the interlocking groove (10) and thus to realize a horizontal interlocking. The method comprises at least the following steps:
- moving the panel (1) into a feeding device (FD) with the first edge (2) relative to a first tool device (18) comprising a first and second rotating cutting tool (20-21) and with the second edge (3) relative to a second tool device (23) comprising a third and fourth rotating cutting tool (25-26);
- forming a first and second, different subcontour (28-29) of the tongue (8) respectively by means of the first and second rotating cutting tool (20-21), wherein the first subcontour (28) comprises the horizontally active interlocking surface (11) of the tongue (8) and the second subcontour (29) comprises the vertically active interlocking surface (9) of the tongue (8); and
- forming a third and fourth, different subcontour (30-31) of the groove (12) respectively by means of the third and fourth rotating cutting tool (25-26), wherein the third subcontour (30) comprises the horizontally active interlocking surface (17) of the groove (12) and the fourth subcontour (31) comprises the vertically active interlocking surface (15) of the groove (12).

At least one of the abovementioned rotating cutting tools (20-21, 25-26) comprises a first group of teeth (32, 35, 38, 41) with a first form and a second group of teeth (33, 36, 39, 43) with a second, different form, so that different parts of the contour of the respective interlocking profile are formed with the teeth of the first and second group.

The respective interlocking surface is formed with the teeth of both the first and the second group (32, 33, 35, 36, 38, 39, 41, 43).

The at least one rotating cutting tool comprises at least three groups of teeth (32-43) each having at least two teeth, and preferably each having four teeth.

The first and second rotating cutting tool are arranged at different angles. The third and the fourth rotating cutting tool are arranged at different angles.

The first, second, third and/or fourth rotating cutting tool are rotating milling tools.

The first and the second tool device comprise pre-treatment tools (19, 24), by means of which at least a part of an abutment surface (50, 51) of the respective interlocking profile (6, 7) is formed. The pre-treatment tools (19, 24) are rotating milling tools.

The first and the second tool device comprise finishing tools (22, 27), by means of which a chamfer is formed on the respective edge near the upper side of the panel. In the example, the finishing tools (22, 27) remove an amount of material in addition to forming the chamfer. The finishing tools (22, 27) are rotating milling tools.

The present invention is by no means limited to the above-described embodiments, but such methods can be realized in accordance with different variants without departing from the scope of the present invention as defined by the appended claims.

The first and second rotating cutting tool are arranged at different angles. The third and the fourth rotating cutting tool are arranged at different angles.

The first, second, third and/or fourth rotating cutting tool are rotating milling tools.

The first and the second tool device comprise pre-treatment tools (19, 24), by means of which at least a part of an abutment surface (50, 51) of the respective interlocking profile (6, 7) is formed. The pre-treatment tools (19, 24) are rotating milling tools.

The first and the second tool device comprise finishing tools (22, 27), by means of which a chamfer is formed on the respective edge near the upper side of the panel. In the example, the finishing tools (22, 27) remove an amount of material in addition to forming the chamfer. The finishing tools (22, 27) are rotating milling tools.

The present invention is by no means limited to the above-described embodiments, but such methods, apparatuses and cutting tools can be realized in accordance with different variants without departing from the scope of the present invention.

## Claims

1. Method for profiling edges of a panel, wherein the panel (1) comprises a first interlocking profile (6) on a first edge (2) and a second interlocking profile (7) on a second, opposite edge (3), which first and second interlocking profile (6-7) are configured to cooperate and thus to realize mechanical interlocking between two such panels (1); wherein the first interlocking profile (6) is configured in the form of a tongue (8); wherein the tongue (8) comprises, on the upper side thereof, a vertically active interlocking surface (9) and, on the underside thereof, an interlocking groove (10) with a horizontally active interlocking surface (11); wherein the second interlocking profile (7) is configured in the form of a groove (12); wherein the groove (12) is bounded by an upper and lower lip (13-14); wherein the upper lip (13) comprises, on the underside thereof, a vertically active interlocking surface (15) that is configured to cooperate with the vertically active interlocking surface (9) on the upper side of the tongue (8) and thus to realize a vertical interlocking between two such panels; wherein the lower lip (14) comprises, on the upper side thereof, an interlocking element (16) with a horizontally active interlocking surface (17) that is configured to cooperate with the horizontally active interlocking surface (11) in the interlocking groove (10) and thus to realize a horizontal interlocking; and wherein the method comprises at least the following steps:
- moving the panel (1) into a feeding device (FD) with the first edge (2) relative to a first tool device (18) comprising a first and second rotating cutting tool (20-21) and with the second edge (3) relative to a second tool device (23) comprising a third and fourth rotating cutting tool (25-26);
- forming a first and second, different subcontour (28-29) of the tongue (8) by means of the first and second rotating cutting tool (20-21), respectively, wherein the first subcontour (28) comprises the horizontally active interlocking surface (11) of the tongue (8) and the second subcontour (29) comprises the vertically active interlocking surface (9) of the tongue (8); and
- forming a third and fourth, different subcontour (30-31) of the groove (12) by means of the third and fourth rotating cutting tool (25-26), respectively, wherein the third subcontour (30) comprises the horizontally active interlocking surface (17) of the groove (12) and the fourth subcontour (31) comprises the vertically active interlocking surface (15) of the groove (12);
**characterized in that** at least one of the abovementioned rotating cutting tools (20-21, 25-26) comprises a first group of teeth (32, 35, 38, 41) with a first form and a second group of teeth (33, 36, 39, 43) with a second, different form, so that different parts of the contour of the respective interlocking profile are formed with the teeth of the first and second group; wherein the at least one rotating cutting tool comprises a tooth sequence that repeats along at least a part of the circumference of the at least one rotating cutting tool, which tooth sequence comprises a tooth from both the first and the second group.

2. Method in accordance with claim 1, wherein only a limited part of the respective subcontour is formed with the teeth of the second group.

3. Method in accordance with claim 1 or 2, wherein the entire respective subcontour is formed with the teeth of the first group.

4. Method in accordance with one of the preceding claims 1 to 3, wherein the respective interlocking surface is formed with the teeth of both the first and the second group (32, 33, 35, 36, 38, 39, 41, 43).

5. Method in accordance with one of the preceding claims 1 to 4, wherein the at least one rotating cutting tool comprises at least three groups of teeth (32-43), each having at least two teeth, and preferably each having four teeth.

6. Method in accordance with one of the preceding claims 1 to 5, wherein the at least one rotating cutting tool is the first and/or the second rotating cutting tool; and/or wherein the at least one rotating cutting tool is the third and/or the fourth rotating cutting tool.

7. Method in accordance with one of the preceding claims, wherein the first rotating cutting tool forms the final contour of a first part of the underside of the tongue and the second rotating cutting tool forms the final contour of the upper side of the tongue and the final contour of a second part of the underside of the tongue.

8. Method in accordance with one of the preceding claims, wherein the third rotating cutting tool forms the final contour of a first part of the upper side of the lower lip and the fourth rotating cutting tool forms the final contour of the underside of the upper lip and the final contour of a second part of the upper side of the lower lip.

9. Method in accordance with one of the preceding claims, wherein the first, second, third and/or fourth rotating cutting tool is a rotating milling tool.

10. Method in accordance with one of the preceding claims, wherein the first and/or second tool device comprise a pre-treatment tool (19, 24), by means of which preferably at least a part of an abutment surface (50, 51) of the respective interlocking profile (6, 7) is formed.

11. Method in accordance with claim 10, wherein the pre-treatment tool (19, 24) is a rotating cutting or milling tool.

12. Method in accordance with one of the preceding claims, wherein the first and/or second tool device comprises a finishing tool (22, 27), by means of which preferably a bevel or chamfer is formed on the respective edge near the upper side of the panel.

13. Method in accordance with claim 12, wherein the finishing tool (22, 27) removes an amount of material, in addition to the possible forming of the bevel or chamfer.

14. Method in accordance with one of the preceding claims, wherein the panel (1) comprises a core or core layer that comprises plastic material with an amount of filler of at least 40 percent by weight, of at least 50 percent by weight, of at least 60 percent by weight or of at least 70 percent by weight based on the total weight of plastic material.

15. Method in accordance with claim 14, wherein the filler material comprises a mineral filler, calcium carbonate, chalk, talc, lime or limestone, a stone or stone-like filler and/or magnesium.

## Patentansprüche

1. Verfahren zum Profilieren von Kanten eines Paneels, wobei das Paneel (1) ein erstes Verriegelungsprofil (6) an einer ersten Kante (2) und ein zweites Verriegelungsprofil (7) an einer zweiten, gegenüberliegenden Kante (3) umfasst, wobei das erste und das zweite Verriegelungsprofil (6-7) so gestaltet sind, dass sie zusammenwirken und somit eine mechanische Verriegelung zwischen zwei solchen Paneelen (1) realisieren; wobei das erste Verriegelungsprofil (6) in Form einer Feder (8) ausgebildet ist; wobei die Feder (8) an ihrer Oberseite eine vertikal aktive Verriegelungsfläche (9) und an ihrer Unterseite eine Verriegelungsnut (10) umfasst, die eine horizontal aktive Verriegelungsfläche (11) aufweist; wobei das zweite Verriegelungsprofil (7) in Form einer Nut (12) ausgebildet ist; wobei die Nut (12) durch eine obere und eine untere Lippe (13-14) begrenzt ist; wobei die obere Lippe (13) an ihrer Unterseite eine vertikal aktive Verriegelungsfläche (15) umfasst, die so gestaltet ist, dass sie mit der vertikal aktiven Verriegelungsfläche (9) an der Oberseite der Feder (8) zusammenwirkt und somit eine vertikale Verriegelung zwischen zwei solchen Paneelen realisiert; wobei die untere Lippe (14) an ihrer Oberseite ein Verriegelungselement (16) umfasst, das eine horizontal aktive Verriegelungsfläche (17) aufweist, die so konfiguriert ist, dass sie mit der horizontal aktiven Verriegelungsfläche (11) in der Verriegelungsnut (10) zusammenwirkt und somit eine horizontale Verriegelung realisiert; und wobei das Verfahren mindestens die folgenden Schritte umfasst:
das Bewegen des Paneels (1) in eine Zuführvorrichtung (FD) mit der ersten Kante (2) relativ zu einer ersten Werkzeugvorrichtung (18), die ein erstes und zweites rotierendes Schneidwerkzeug (20-21) umfasst, und mit der zweiten Kante (3) relativ zu einer zweiten Werkzeugvorrichtung (23), die ein drittes und viertes rotierendes Schneidwerkzeug (25-26) umfasst;
das Ausbilden einer ersten und zweiten, unterschiedlichen Teilkontur (28-29) der Feder (8) mittels des ersten bzw. zweiten rotierenden Schneidwerkzeugs (20-21), wobei die erste Teilkontur (28) die horizontal aktive Verriegelungsfläche (11) der Feder (8) umfasst und die zweite Teilkontur (29) die vertikal aktive Verriegelungsfläche (9) der Feder (8) umfasst; und
das Ausbilden einer dritten und vierten, unterschiedlichen Teilkontur (30-31) der Nut (12) mittels des dritten bzw. vierten rotierenden Schneidwerkzeugs (25-26), wobei die dritte Teilkontur (30) die horizontal aktive Verriegelungsfläche (17) der Nut (12) umfasst und die vierte Teilkontur (31) die vertikal aktive Verriegelungsfläche (15) der Nut (12) umfasst;
**dadurch gekennzeichnet, dass** mindestens eines der oben erwähnten rotierenden Schneidwerkzeuge (20-21, 25-26) eine erste Gruppe von Zähnen (32, 35, 38, 41) mit einer ersten Form und eine zweite Gruppe von Zähnen (33, 36, 39, 43) mit einer zweiten, anderen Form umfasst, so dass unterschiedliche Teile der Kontur des jeweiligen Verriegelungsprofils mit den Zähnen der ersten und zweiten Gruppe gebildet werden; wobei das mindestens eine rotierende Schneidwerkzeug eine Zahnfolge umfasst, die sich entlang mindestens eines Teils des Umfangs des mindestens einen rotierenden Schneidwerkzeugs wiederholt, wobei die Zahnfolge einen Zahn sowohl aus der ersten als auch aus der zweiten Gruppe umfasst.

2. Verfahren nach Anspruch 1, wobei nur ein begrenzter Teil der jeweiligen Teilkontur mit den Zähnen der zweiten Gruppe gebildet wird.

3. Verfahren nach Anspruch 1 oder 2, wobei die gesamte jeweilige Teilkontur mit den Zähnen der ersten Gruppe gebildet wird.

4. Verfahren nach einem der vorhergehenden Ansprüche 1 bis 3, wobei die jeweilige Verriegelungsfläche mit den Zähnen sowohl der ersten als auch der zweiten Gruppe (32, 33, 35, 36, 38, 39, 41, 43) gebildet wird.

5. Verfahren nach einem der vorhergehenden Ansprüche 1 bis 4, wobei das mindestens eine rotierende Schneidwerkzeug mindestens drei Gruppen von Zähnen (32-43) mit jeweils mindestens zwei Zähnen, vorzugsweise mit jeweils vier Zähnen, umfasst.

6. Verfahren nach einem der vorhergehenden Ansprüche 1 bis 5, wobei das mindestens eine rotierende Schneidwerkzeug das erste und/oder das zweite rotierende Schneidwerkzeug ist; und/oder wobei das mindestens eine rotierende Schneidwerkzeug das dritte und/oder das vierte rotierende Schneidwerkzeug ist.

7. Verfahren nach einem der vorhergehenden Ansprüche, wobei das erste rotierende Schneidwerkzeug die Endkontur eines ersten Teils der Federunterseite bildet und das zweite rotierende Schneidwerkzeug die Endkontur der Federoberseite und die Endkontur eines zweiten Teils der Federunterseite bildet.

8. Verfahren nach einem der vorhergehenden Ansprüche, wobei das dritte rotierende Schneidwerkzeug die Endkontur eines ersten Teils der Oberseite der Unterlippe bildet und das vierte rotierende Schneidwerkzeug die Endkontur der Unterseite der Oberlippe und die Endkontur eines zweiten Teils der Oberseite der Unterlippe bildet.

9. Verfahren nach einem der vorhergehenden Ansprüche, wobei das erste, zweite, dritte und/oder vierte rotierende Schneidwerkzeug ein rotierendes Fräswerkzeug ist.

10. Verfahren nach einem der vorhergehenden Ansprüche, wobei die erste und/oder zweite Werkzeugvorrichtung ein Vorbehandlungswerkzeug (19, 24) umfasst, mit dem vorzugsweise zumindest ein Teil einer Anlagefläche (50, 51) des jeweiligen Verriegelungsprofils (6, 7) ausgebildet wird.

11. Verfahren nach Anspruch 10, wobei das Vorbehandlungswerkzeug (19, 24) ein rotierendes Schneid- oder Fräswerkzeug ist.

12. Verfahren nach einem der vorhergehenden Ansprüche, wobei die erste und/oder zweite Werkzeugeinrichtung ein Nachbearbeitungswerkzeug (22, 27) umfasst, mit dem vorzugsweise eine Fase oder Abschrägung an der jeweiligen Kante nahe der Oberseite des Paneels ausgebildet wird.

13. Verfahren nach Anspruch 12, wobei das Nachbearbeitungswerkzeug (22, 27) zusätzlich zur eventuellen Ausbildung der Fase oder der Abschrägung eine Menge des Materials abträgt.

14. Verfahren nach einem der vorhergehenden Ansprüche, wobei das Paneel (1) einen Kern oder eine Kernschicht umfasst, der oder die ein Kunststoffmaterial umfasst, das einen Füllstoffanteil von mindestens 40 Gewichtsprozent, von mindestens 50 Gewichtsprozent, von mindestens 60 Gewichtsprozent oder von mindestens 70 Gewichtsprozent, bezogen auf das Gesamtgewicht des Kunststoffmaterials, aufweist.

15. Verfahren nach Anspruch 14, wobei das Füllstoffmaterial einen mineralischen Füllstoff, Calciumcarbonat, Kreide, Talk, Kalk oder Kalkstein, einen steinartigen Füllstoff und/oder Magnesium umfasst.

## Revendications

1. Procédé destiné au profilage de bords d'un panneau, dans lequel le panneau (1) comprend un premier profil (6) de verrouillage réciproque sur un premier bord (2) et un deuxième profil (7) de verrouillage réciproque sur un deuxième bord opposé (3), lesdits premier et deuxième profils (6-7) de verrouillage réciproque étant configurés pour coopérer et pour ainsi mettre en oeuvre un verrouillage réciproque mécanique entre deux panneaux (1) de ce type ; dans lequel le premier profil (6) de verrouillage réciproque est configuré sous la forme d'une languette (8), dans lequel la languette (8) comprend, sur son côté supérieur, une surface (9) de verrouillage réciproque active dans la direction verticale, et, sur son côté inférieur, une rainure (10) de verrouillage réciproque qui comprend une surface (11) de verrouillage réciproque active dans la direction horizontale ; dans lequel le deuxième profil (7) de verrouillage réciproque est configuré sous la forme d'une rainure (12) ; dans lequel la rainure (12) est délimitée par une lèvre supérieure et une lèvre inférieure (13-14) ; dans lequel la lèvre supérieure (13) comprend, sur son côté inférieur, une surface (15) de verrouillage réciproque active dans la direction verticale, qui est configurée pour coopérer avec la surface (9) de verrouillage réciproque active dans la direction verticale, sur le côté supérieur de la languette (8) et pour, de cette manière, mettre en oeuvre un verrouillage réciproque vertical entre deux panneaux de ce type ; dans lequel la lèvre inférieure (14) comprend, sur son côté supérieur, un élément (16) de verrouillage réciproque qui comprend une surface (17) de verrouillage réciproque active dans la direction horizontale, qui est configurée pour coopérer avec la surface (11) de verrouillage réciproque active dans la direction horizontale dans la rainure (10) de verrouillage réciproque et pour, de cette manière, mettre en oeuvre un verrouillage réciproque horizontal ; et dans lequel le procédé comprend au moins les étapes suivantes dans lesquelles :
- on introduit le panneau (1) dans un dispositif d'alimentation (FD) avec le premier bord (2) par rapport à un premier dispositif (18) faisant office d'outil qui comprend un premier et un deuxième outil de coupe rotatif (20-21) et avec le deuxième bord (3) par rapport à un deuxième dispositif (23) faisant office d'outil qui comprend un troisième et un quatrième outil de coupe rotatif (25-26) ;
- on forme un premier sous-contour et un deuxième sous-contour différent (28-29) de la languette (8) au moyen du premier et du deuxième outil de coupe rotatif (20-21), respectivement, dans lequel le premier sous-contour (28) comprend la surface (11) de verrouillage réciproque de la languette (8), active dans la direction horizontale et le deuxième sous-contour (29) comprend la surface (9) de verrouillage réciproque de la languette (8), active dans la direction verticale ; et
- on forme un troisième sous-contour et un quatrième sous-contour différent (30-31) de la rainure (12) au moyen du troisième et du quatrième outil de coupe rotatif (25-26), respectivement, dans lequel le troisième sous-contour (30) comprend la surface (17) de verrouillage réciproque de la rainure (12), active dans la direction horizontale et le quatrième sous-contour (31) comprend la surface (15) de verrouillage réciproque de la rainure (12), active dans la direction verticale ;
**caractérisé en ce qu'**au moins un des outils de coupe rotatifs (20-21, 25-26) qui ont été mentionnés ci-dessus comprend un premier groupe de dents (32, 35, 38, 41) qui présentent une première forme et un deuxième groupe de dents (33, 36, 39, 43) qui présentent une deuxième forme différente, d'une manière telle que l'on forme différentes parties du contour du profil respectif de verrouillage réciproque avec les dents du premier et du deuxième groupe ; dans lequel ledit au moins un outil de coupe rotatif comprend une séquence de dents qui se répète sur au moins une partie de la circonférence dudit au moins un outil de coupe rotatif, dans lequel ladite séquence de dents comprend une dent faisant partie à la fois du premier et du deuxième groupe.

2. Procédé selon la revendication 1, dans lequel uniquement une partie limitée du sous-contour respectif est formée avec les dents du deuxième groupe.

3. Procédé selon la revendication 1 ou 2, dans lequel le sous-contour respectif dans sa totalité est formé avec les dents du premier groupe.

4. Procédé selon une des revendications 1 à 3, dans lequel la surface respective de verrouillage réciproque est formée avec les dents à la fois du premier et du deuxième groupe (32, 33, 35, 36, 38, 39, 41, 43).

5. Procédé selon une des revendications 1 à 4, dans lequel ledit au moins un outil de coupe rotatif comprend au moins trois groupes de dents (32-43), chacun possédant au moins deux dents, et de préférence chacun possédant quatre dents.

6. Procédé selon une des revendications 1 à 5, dans lequel ledit au moins un outil de coupe rotatif représente le premier et/ou le deuxième outil de coupe rotatif; et/ou dans lequel ledit au moins un outil de coupe rotatif représente le troisième et/ou le quatrième outil de coupe rotatif.

7. Procédé selon une des revendications précédentes, dans lequel le premier outil de coupe rotatif forme le contour final d'une première partie du côté inférieur de la languette et le deuxième outil de coupe rotatif forme le contour final du côté supérieur de la languette et le contour final d'une deuxième partie du côté inférieur de la languette.

8. Procédé selon une des revendications précédentes, dans lequel le troisième outil de coupe rotatif forme le contour final d'une première partie du côté supérieur de la lèvre inférieure et le quatrième outil de coupe rotatif forme le contour final du côté inférieur de la lèvre supérieure et le contour final d'une deuxième partie du côté supérieur de la lèvre inférieure.

9. Procédé selon une des revendications précédentes, dans lequel le premier, le deuxième, le troisième et/ou le quatrième outil de coupe rotatif représente(nt) un outil de fraisage rotatif.

10. Procédé selon une des revendications précédentes, dans lequel le premier et/ou le deuxième dispositif faisant office d'outil comprend/comprennent un outil de prétraitement (19, 24) au moyen duquel on forme de préférence au moins une partie d'une surface de butée (50, 51) du profil respectif (6, 7) de verrouillage réciproque.

11. Procédé selon la revendication 10, dans lequel l'outil de prétraitement (19, 24) représente un outil de coupe ou un outil de fraisage rotatif.

12. Procédé selon une des revendications précédentes, dans lequel le premier et/ou le deuxième dispositif faisant office d'outil comprend/comprennent un outil de finition (22, 27) au moyen duquel on forme de préférence un biseau ou un chanfrein sur le bord respectif à proximité du côté supérieur du panneau.

13. Procédé selon la revendication 12, dans lequel l'outil de finition (22, 27) retire une quantité de matière, en plus de la formation possible du biseau ou du chanfrein.

14. Procédé selon une des revendications précédentes, dans lequel le panneau (1) comprend une partie centrale ou une couche centrale qui comprend une matière plastique avec une quantité de matière de remplissage d'au moins 40 pour cent en poids, d'au moins 50 pour cent en poids, d'au moins 60 pour cent en poids d'au moins 70 pour cent en poids, basés sur le poids total de la matière plastique.

15. Procédé selon la revendication 14, dans lequel la matière de remplissage comprend une matière de remplissage minérale, du cabonate de calcium, de la craie, du talc, de la chaux ou du calcaire, de la pierre ou une maière de charge à base de pierre et/ou du magnésium.
